# EUROPÄISCHE PATENTSCHRIFT

(11) **EP 0 861 121 B1**
(45) Veröffentlichungstag und Bekanntmachung des Hinweises auf die Patenterteilung: **28.07.1999**
(21) Anmeldenummer: 96934816.8
(22) Anmeldetag: 24.10.1996
(51) Int. Cl.: B01J 19/24, B01F 5/06, B01F 5/02

(54) **VERFAHREN ZUR HERSTELLUNG VON DISPERSIONEN UND ZUR DURCHFÜHRUNG CHEMISCHER REAKTIONEN MIT DISPERSER PHASE**
METHOD OF PRODUCING DISPERSIONS AND CARRYING OUT CHEMICAL REACTIONS IN THE DISPERSE PHASE
PROCEDE POUR PRODUIRE DES DISPERSIONS ET POUR EFFECTUER DES REACTIONS CHIMIQUES A PHASE DISPERSEE

(30) Priorität: 06.11.1995 DE 19541265
(43) Veröffentlichungstag der Anmeldung: 02.09.1998
(73) Patentinhaber: BAYER AG, 51368 Leverkusen (DE); Forschungszentrum Karlsruhe GmbH, 76133 Karlsruhe (DE)
(72) Erfinder: SCHUBERT, Klaus, D-76227 Karlsruhe (DE); BIER, Wilhelm, D-76344 Eggenstein-Leopoldshafen (DE); LINDER, Gerd, D-76149 Karlsruhe (DE); HERRMANN, Erhard, D-51375 Leverkusen (DE); KOGLIN, Bernd, D-51467 Bergisch Gladbach (DE); MENZEL, Thomas, D-40723 Hilden (DE)
(74) Vertreter: Drope, Rüdiger, Dr.
(86) Internationale Anmeldenummer: EP9604664
(87) Internationale Veröffentlichungsnummer: WO9717133

(56) Entgegenhaltungen:
- WO-A-88/06941
- WO-A-95/30476
- GB-A- 2 073 604

## Beschreibung

Dispergieren ist die Bezeichnung für die Zerteilung und möglichst feine Verteilung eines Stoffes in einem anderen. Die fertige Mischung heißt Dispersion. In einer Dispersion liegen eine oder mehrere dispers verteilte Phasen in einer kontinuierlichen Phase vor. Im Unterschied zum Mischen wird beim Dispergieren also nicht die gegenseitige Durchdringung der einzelnen Phasen angestrebt, sondern das möglichst gleichförmige Zerteilen und Verteilen einer oder mehrerer Dispersphasen in einer kontinuierlichen Phase. Typische Beispiele von durch Dispergieren hergestellten Dispersionen aus dem Bereich der Chemie sind Flüssigkeit-Flüssigkeit-Systeme wie Emulsionen (disperse Phase: Flüssigkeit, kontinuierliche Phase: Flüssigkeit), Gas-Flüssigkeit-Systeme wie begaste Flüssigkeiten und Schmelzen (disperse Phase: Gas, kontinuierliche Phase: Flüssigkeit/Schmelze), wie z. B. beim Aufschäumen von Kunststoffschmelzen, und Nebel (disperse Phase: Flüssigkeit, kontinuierliche Phase: Gas) sowie Flüssigkeit-Feststoff-Systeme wie Suspensionen (disperse Phase: Feststoff, kontinuierliche Phase: Flüssigkeit), bei denen die Feststoffphase beim Dispergiervorgang durch Ausfällen eines gelösten Stoffes als unlöslicher Niederschlag entsteht. Das Dispergieren ist entweder der rein physikalische Vorgang des Zerteilens wie im Fall der Herstellung von Emulsionen für Salben oder Cremes oder wird - wie in vielen technischen Anwendungsfällen - eingesetzt als erster einleitender Reaktionsschritt bei der Durchführung chemischer Reaktionen in zwei- oder mehrphasigen Reaktionssystemen. Bei Durchführung chemischer Reaktionen wird die Art des Dispergierens wesentlich durch die Kinetik, d. h. durch die Geschwindigkeit der zugrundeliegenden Reaktion bestimmt. So ist bei schnellen chemischen Reaktionen der Stofftransport zwischen den an der Reaktion beteiligten Phasen für die Geschwindigkeit der chemischen Umsetzung maßgebend. Dementsprechend besteht eine wesentliche Aufgabe des Dispergierschrittes darin, zur Beschleunigung des Stofftransports möglichst viel Phasengrenzfläche pro Reaktionsvolumen, d. h. kleine disperse Partikeln wie z. B. Flüssigkeitstropfen oder Gasblasen zu erzeugen, und den dafür erforderlichen Energieaufwand zu minimieren.

Technische Dispergierverfahren haben also zum Ziel, eine oder mehrere Komponenten gleichmäßig und reproduzierbar in einer kontinuierlichen Phase zu zerund verteilen. Zielgrößen sind dabei u.a. die Herstellung von Dispersionen mit definierten Partikelgrößen für die disperse Phase, möglichst kleine Partikeln mit entsprechend großer volumenspezifischer Phasengrenzfläche zwischen disperser und kontinuierlicher Phase sowie enge Partikelgrößenverteilungen. Die zum Dispergieren eingesetzte Dispergiervorrichtung ist so zu gestalten und auszulegen, daß sie die Dispergieraufgabe mit minimalem Energieaufwand, d.h. mit hoher Effizienz, bewältigt.

Nach dem Stand der Technik werden zum Dispergieren eine Vielzahl von Dispergierorganen eingesetzt. Prinzipiell zu unterscheiden sind dynamische und statische Dispergierapparate [1],[2],[3]. Dynamische Dispergierapparate sind dadurch gekennzeichnet, daß sie sowohl von der sich ausbildenden dispersen Phase als auch von der kontinuierlichen Phase durch- bzw. überströmt werden und unter Energieaufwand in Bewegung versetzt werden, wobei die Bewegungsenergie der kontinuierlichen Phase eine zusätzliche Zerteilungswirkung auf die disperse Phase ausübt. Statische Dispergierapparate werden dagegen lediglich von der sich ausbildenden dispersen Phase durch- bzw. überströmt.

Dynamische Dispergierapparate für Flüssigkeit-Flüssigkeit-Systeme sind z.B. Düsen, Düsen kombiniert mit nachgeschalteten Strahldispergatoren, Rührer sowie Rotor-Stator-Systeme [2], für Gas-Flüssigkeit-Systeme z. B. Injektoren, Ejektoren (=Strahlsauger), Venturidüsen und Rührer [1],[3] sowie für Flüssigkeit-Feststoff-Systeme z. B. Fälldüsen und Rührer.

Statische Dispergierapparate für Flüssigkeit-Flüssigkeit-, Gas-Flüssigkeit- sowie Feststoff-Flüssigkeit-Systeme sind z. B. Einsteckrohre, Siebböden, Lochplatten aus Metall, Gummi oder Kunststoff, wahlweise auch mit pulsierender Platte, Rohrverteilerringe sowie Sinterplatten aus Glas oder Metall (vorzugsweise für Gas-Flüssigkeit-Systeme [1], [3]).

Nachteilig wirkt sich beim Einsatz von nach dem Stand der Technik verfügbaren dynamischen Dispergierapparaten aus, daß die Zerteilung der dispersen Phase im turbulenten Scherfeld erfolgt, wobei die Ungleichverteilung der lokalen Energiedissipationsraten zu breiten Partikelgrößenverteilungen für die disperse Phase führt. Zur Herstellung von Dispersionen mit geringen mittleren Partikelabmessungen für die disperse Phase und entsprechend großer volumenspezifischer Phasengrenzfläche ist weiterhin im Vergleich zu statischen Dispergierapparaten ein hoher Energieaufwand erforderlich.

Derzeit verfügbare statische Dispergierapparate weisen gegenüber dynamisch betriebenen Apparaten zwar eine höhere Effizienz auf, d. h. das Verhältnis von erzeugter volumenspezifischer Phasengrenzfläche zu geleistetem Energieaufwand ist größer. Die mit statischen Apparaten überhaupt erzielbare volumenspezifische Phasengrenzfläche und damit Reaktorleistung bzw. Raum-Zeit-Ausbeute ist in der Regel jedoch Klein. Mit statischen Apparaten werden Partikelabmessungen für die disperse Phase erhalten werden, die größer sind als die Abmessungen der Bohrungen, über welche die disperse Phase eingetragen wird, d. h. meist größer 1 mm. Sinterplatten erlauben zwar auch die Herstellung von Partikeln kleiner 1 mm, allerdings neigen Sinterplatten zu Verschmutzung und Verkrustung und ihre Anwendung ist auf den Bereich kleinerer Durchsätze und damit kleinerer Reaktorleistungen beschränkt.

Ausgehend von diesem Stand der Technik liegt der Erfindung folgende Aufgabenstellung zugrunde. Ziel ist es, qualitativ hochwertige und für den jeweiligen Anwendungsfall maßgeschneiderte Dispersionen herzustellen. Dazu ist es erforderlich, daß die disperse Phase aus Partikeln besteht, deren Abmessungen in weiten Grenzen frei einstellbar sind, und deren Größe vorzugsweise im Bereich feinteiliger Partikeln kleiner 1 mm liegt. Dies führt zu entsprechend großen volumenspezifischen Phasengrenzflächen. Weiterhin ist es vorteilhaft, enge Partikelgrößenverteilungen einstellen zu können. Der Energieaufwand zur Herstellung solcher Dispersionen muß Kleiner sein als bei Einsatz von Dispergierapparaten nach dem Stand der Technik. Weiterhin muß der eingesetzte Dispergierapparat größere Durchsätze erlauben, so daß auch eine technische Realisierung ermöglicht wird.

Der Lösung dieser Aufgabe liegt ein Verfahren zur kontinuierlichen Dispergierung von mindestens einem die Dispersphase bildenden Fluid A und mindestens einer die Hüllphase bildenden kontinuierlichen Phase eines Fluids B zugrunde, bei dem mindestens ein Fluidstrom A und mindestens ein Fluidstrom B einem Dispergierapparat zugeführt werden und dort in einem Dispergierraum aufeinandertreffen. Das Kennzeichen der erfindungsgemäßen Lösung besteht darin, daß die Fluidströme A,B in einem Mikrostruktur-Dispergierapparat durch eine ihnen jeweils zugeordnete Schar von Mikrokanälen in räumlich getrennte, strömende Fluidfäden zerteilt werden, die mit für das jeweilige Fluid gleichen Strömungsgeschwindigkeiten derart in den Dispergierraum austreten, daß am Austritt in den Dispergierraum jeweils ein Fluidstrahl der dispersen Phase zu einem Fluidstrahl der kontinuierlichen Phase unmittelbar benachbart ist und jeweils ein in Partikel zerfallender Fluidstrahl der dispersen Phase von den benachbarten Fluidstrahlen der kontinuierlichen Phase eingehüllt wird. Die Fluidfäden können Zylinder-, Lamellen- oder jede andere geometrische Form aufweisen.

Das Verfahren kann entweder in der Weise ausgeführt werden, daß als Fluid A ein Gas und als Fluid B eine Flüssigkeit verwendet werden oder daß als Fluide mindestens zwei verschiedene Flüssigkeiten zum Einsatz kommen Im ersten Fall wird also das Verfahren zur Begasung und im zweiten Fall zur Emulsionsherstellung benutzt.

Eine interessante, spezielle Ausführungsform besteht darin, daß als Fluide chemisch miteinander reagierende Edukte A,B eingesetzt werden, sodaß im Dispergierraum unmittelbar nach der Dispergierung eine chemische Umsetzung der Edukte A,B erfolgt.

Vorzugsweise werden in den Mikrokanälen laminare Strömungsbedingungen für die Fluidströme A und B aufrechterhalten. Damit liegen unmittelbar am Austritt aus den Mikrokanälen für die Fluidströme A und B ebenfalls laminare Strömungsbedingungen vor. Die am Austritt aus den Mikrokanälen einsetzende Dispergierung der dispersen Phase A in der kontinuierlichen Phase B findet damit unter laminaren Bedingungen statt. Typische unter laminaren Strömungsbedingungen ablaufende Dispergiervorgänge sind bei Flüssigkeit-Flüssigkeit-Systemen z. B. das sogenannte laminare Zertropfen [4], bei Gas-Flüssigkeit-Systemen z. B. das sogenannte Blasengasen [4]. Es steht jedoch nichts im Wege, gegebenenfalls mit turbulenten Strömungen in den Mikrokanälen zu arbeiten.

Besonders bewährt hat sich eine Ausführungsform, bei der die Fluidfäden der Ströme A und B in abwechselnd übereinanderliegenden oder nebeneinanderliegenden Schichten in den Dispergierraum austreten.

Durch eine entsprechende Anordnung der Mikrokanäle läßt sich auch erreichen, daß die Fluidfäden der Ströme A und B schachbrettartig in den Dispergierraum austreten.

Die Geometrie des Milcrostruktur-Dispergierapparates ist in vorteilhafter Weise so ausgelegt, daß der hydraulische Durchmesser d der Mikrokanäle, definiert als die vierfache Querschnittsfläche dividiert durch den Umfang der Mikrokanäle, Werte zwischen 10 µm und 1000 µm, vorzugsweise zwischen 50 µm und 250 µm, annimmt. Vorteilhaft wird das Querschnittsverhältnis der Fluidstrahlen der kontinuierlichen Phase B und der dispersen Phase A auf Werte zwischen 1 und 100, vorzugsweise zwischen 2 und 50 eingestellt.

Bei Abmessungen der Mikrokanäle größer 250 µm können zur Erhöhung der mechanischen Stabilität des Dispergierapparates Stützstege in die Mikrokanäle eingebaut werden. Durch gleiche geometrische Dimensionierung (gleicher Querschnitt und gleiche Länge) für die dem Fluidstrom A bzw. B zugeordneten Mikrokanäle wird sichergestellt, daß die aus Fluidstrom A bzw. B gebildeten Fluidfäden mit jeweils gleicher Strömungsgeschwindigkeit aus den Mikrokanälen austreten. Für den Fluidstrom A sind also die Strömungsgeschwindigkeiten in den zugeordneten Mikrokanälen untereinander gleich. Gleiches gilt für Fluidstrom B. Dabei kann die Strömungsgeschwindigkeit von A in den Mikrokanälen unterschiedlich zu der von B sein. Da die Abmessungen der als disperse Phase vorliegenden Partikeln von der Strömungsgeschwindigkeit am Austritt aus den Mikrokanälen abhängig ist, führen einheitliche Austrittsgeschwindigkeiten zu einer technisch oft angestrebten engen Partikelgrößenverteilung.

Eine Weiterentwicklung des erfindungsgemäßen Verfahrens besteht darin, daß in Nachbarschaft zu einem Freistrahl von A und/oder B zusätzlich ein Freistrahl eines temperierten Fluids z. B. zu Heiz- oder Kühlzwecken in den Dispergier-/Reaktionsraum eingespeist wird.

Das erfindungsgemäße Verfahren beruht also darauf, daß der Fluidstrom A für die disperse Phase und der Fluidstrom B für die kontinuierliche Phase zunächst mittels des Mikrostruktur-Dispergierapparates durch Aufteilung auf einzelne Mikrokanäle in feine Fluidfäden aufgetrennt werden, wobei der Fluidstrom A am Austritt aus den Mikrokanälen als disperse Phase in der vom Fluidstrom B gebildeten kontinuierlichen Phase (Hüllphase) zer- und verteilt wird. Ein Kontakt der Fluidströme A und B findet erst am Austritt aus dem Mikrostruktur-Dispergierapparat statt, nicht jedoch im Apparat selbst. Am Austritt der Mikrokanäle in den Dispergierraum wird die disperse Phase direkt von der kontinuierlichen Phase umhüllt. Dadurch kann eine Koaleszenz der kleineren Partikel zu größeren Partikeln vermieden werden.

Das erfindungsgemäße Verfahren ermöglicht es, durch Einsatz eines Mikrostruktur-Dispergierapparates mit hydraulischen Durchmessern der Mikrokanäle zwischen 10 µm und 1000 µm, vorzugsweise zwischen 50 µm und 250 µm, entsprechend Kleine Partikeln für die disperse Phase herzustellen. Entsprechend groß ist die dabei erhaltene volumenspezifische Phasengrenzfläche zwischen disperser und kontinuierlicher Phase. Wesentlich unterstützt werden diese Vorgänge dadurch, daß in unmittelbarer Nachbarschaft zu den Fluidfäden der dispersen Phase auch Fluidfäden der kontinuierlichen Phase vorliegen. Dabei ist es ausreichend, daß nur geringe Mengen an kontinuierlicher Phase durch den Mikrostruktur-Dispergierapparat hindurchströmen und der verbleibende Volumenstromanteil konventionell z. B. über ein einfaches Einleitrohr, d. h. ohne unter Energieaufwand einen Dispergierapparat zu durchströmen, eingeleitet wird. Der Energieaufwand, der für die kontinuierliche Phase beim Durchströmen des Mikrostruktur-Dispergierapparates aufzubringen ist in der Regel gering. Insgesamt ist der Gesamtenergieaufwand zur Erzielung einer bestimmten volumenspezifischen Phasengrenzfläche bei Einsatz eines Mikrostruktur-Dispergierapparates geringer als bei vergleichbaren Dispergierapparaten nach dem Stand der Technik. Diese Art des Dispergierens führt u.a. zu einer erhöhten Stabilität von Dispersionen sowie zu einer Erhöhung der Brutto-Reaktionsgeschwindigkeit bei stofftransport-kontrollierten Reaktionen in Zwei- und Mehrphasensystemen. Die Abmessungen der Partikeln liegen dabei typischerweise bei Werten < 1000 µm. Durch Variation der Mikrokanalabmessungen können die angestrebten Partikelabmessungen eingestellt, d. h. entsprechend der gewünschten Applikationsform maßgeschneidert werden. Bei den vorzugsweise angestrebten laminaren Strömungsbedingungen am Mikrokanalaustritt ergeben sich enge Partikelgrößenverteilungen. Trotz laminarer Strömungsbedingungen und den daraus resultierenden geringen Volumenströmen pro Mikrokanal ergeben sich bei Einsatz eines Mikrostruktur-Dispergierapparates hohe Durchsätze durch die Möglichkeit der Parallelschaltung vieler einzelner Mikrokanäle, vorzugsweise mehr als 3000 Mikrokanäle pro cm² Austrittsfläche. Es liegt im Wesen von Mikrostruktur-Bauteilen, daß diese trotz einer großen Anzahl parallelgeschalteter Mikrokanäle weiterhin nur geringe äußere Abmessungen aufweisen. Dies erleichtert den Einbau solcher Dispergierapparate in Apparate und Anlagen. Durch die unmittelbare Nachbarschaft von Fluidfäden für die disperse Phase A und Fluidfäden für die kontinuierliche Phase B wird eine Koaleszenz, d.h. ein Zusammenlagern von kleineren zu größeren Partikeln und damit eine Verbreiterung des resultierenden Partikelgrößenspektrums ganz oder teilweise unterdrückt. Dabei wirken die Fluidfäden der kontinuierlichen Phase B als Hüllphase für die gebildeten Partikeln der dispersen Phase A. Partikeln können somit durch eine Hüllschicht von den entsprechenden Nachbarpartikeln getrennt werden, d.h. unabhängig voneinander entstehen und abfließen. Durch Variation der Fluidströme A und B untereinander ist ebenfalls eine dosierte Beeinflussung von Partikelgröße und Partikelgrößenverteilung möglich. So führt eine Verringerung des Durchsatzverhältnisses von Dispersphase A zur kontinuierlichen Phase B zu kleineren Partikeln bei gleichzeitig engerem Partikelgrößenspektrum.

Als typische Anwendungsfelder für das oben beschriebene Verfahren sind zu nennen die Herstellung von Dispersionen, wie z.B. Emulsionen, begaste Flüssigkeiten, Schäume, Nebel und Suspensionen, sowie Reaktionen in Zwei- bzw. Mehrphasensystemen.

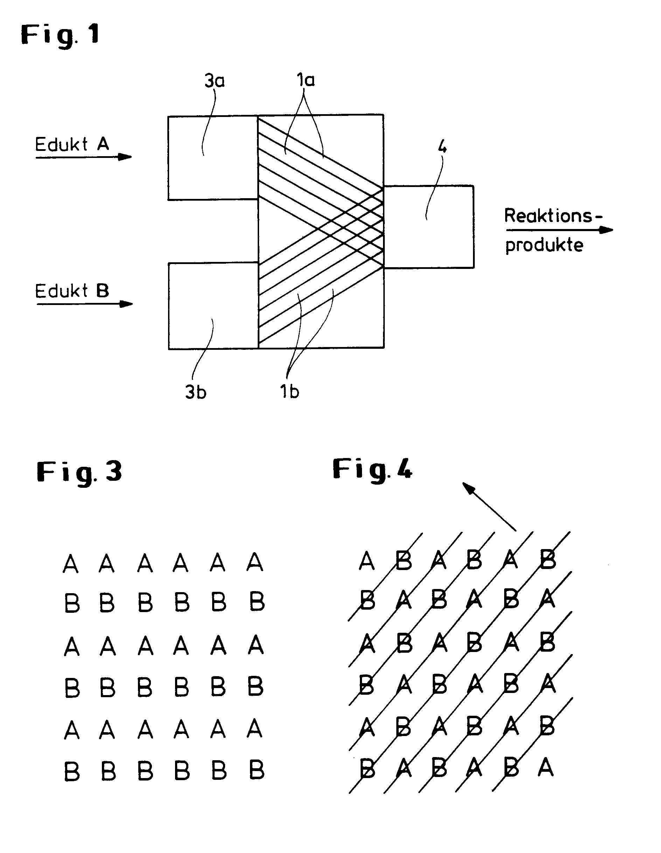

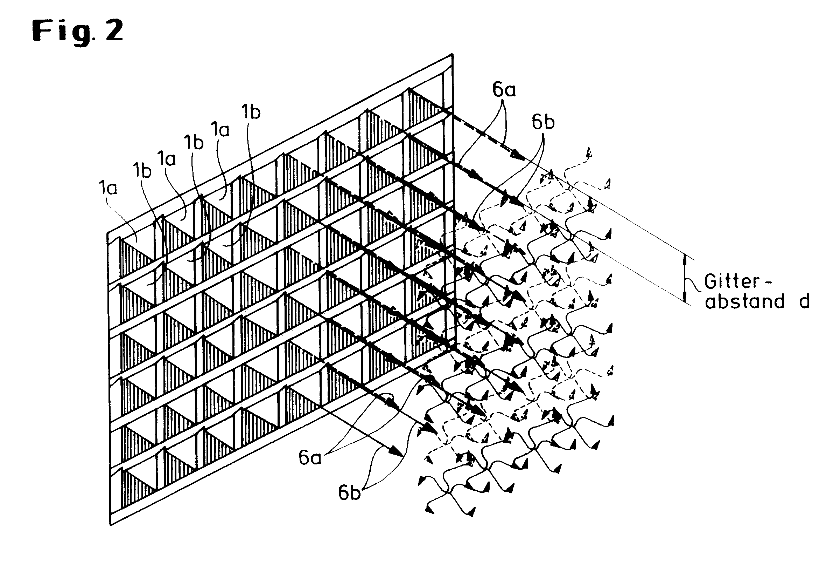

Zur Durchführung des erfindungsgemäßen Verfahrens hat sich ein Mikrostruktur-Dispergierapparat mit wenigstens einem Dispergier-/Reaktionsraum und einem vorgeschalteten Führungsbauteil für die Zufuhr der Fluidströme als geeignet bewährt. Dieser Apparat kann sowohl statisch betrieben werden, indem nur die disperse Phase durch den Apparat strömt, als auch dynamisch, indem sowohl disperse als auch kontinuierliche Phase durch den Apparat strömen. Fig. 1 zeigt den schematischen Aufbau der Vorrichtung. Dabei ist das Führungsbauteil aus mehreren plattenartigen, in Sandwichbauweise übereinander geschichteten Elementen zusammengesetzt, die von schräg zur Achse des Mikro-Dispergierapparates verlaufenden Mikrokanälen durchzogen sind, wobei sich die Kanäle benachbarter Elemente berührungslos kreuzen und in den Dispergier-/Reaktionsraum 4 einmünden. Auf eine Platte mit den Mikrokanälen 1a folgt jeweils eine Platte mit den Mikrokanälen 1b; d. h. zwei im Stapel unmittelbar übereinander angeordnete Platten sind jeweils mit einer Schar von Mikrokanälen 1a, 1b versehen, wobei die Mikrokanalscharen aufeinanderfolgender Platten einen Winkel α miteinander bilden. Die Platten haben z. B. eine Dicke zwischen 30 µm und 1000 µm, vorzugsweise zwischen 50 µm und 500 µm. Der hydraulische Durchmesser der Mikrokanäle liegt zwischen 10 µm und 1000 µm, vorzugsweise zwischen 50 µm und 250 µm. Gegenüber Sinterplatten hat der beschriebene Mikrostruktur-Dispergierapparat den Vorteil einer regelmäßigen Kanalstruktur und weist damit vergleichsweise geringe Druckverluste bei der Durchströmung auf, wobei gleichzeitig die Gefahr einer Verstopfung wesentlich geringer ist als bei einer Sinterplatte.

Im folgenden wird die Erfindung anhand von Zeichnungen und Ausführungsbeispielen näher erläutert. Es zeigen:
- Fig. 1: den prinzipiellen Aufbau eines Mikrokanaldispergators für eine disperse Phase A (Edukt A) und eine kontinuierliche Phase (Hüllphase) B mit symmetrischen Strömungswegen,
- Fig. 2: schematisch die Mikrodispergierung der aus dem Mikrokanaldispergator in den Dispergierraum bzw. Reaktionsraum eintretenden, den Edukten A, B zugeordneten Fluidstrahlen
- Fig. 3: eine Ausführungsform, bei der die räumliche Anordnung der den Edukten A, B zugeordneten Fluidfäden beim Eintritt in den Dispergier/Reaktionsraum durch abwechselnd übereinanderliegende Schichten charakterisiert ist.
- Fig. 4: eine zu Fig. 3 alternative Ausführungsform, bei der die Fluidfäden der Edukte A, B schachbrettartig in den Dispergier/Reaktionsraum austreten.
- Fig. 5a: eine Querschnittsansicht der in den Dispergierraum einmündenden Mikrokanäle
- Fig. 5b: eine Querschnittsansicht bei einer alternativen Ausführung, bei der die Querschnitte der einmündenden Mikrokanäle für die Hüllphase B größer ist als die Querschnitte für die disperse Phase A
- Fig. 6a: mehrere, zu stapelnde Folien als Bauelemente für den Mikrokanaldispergator
- Fig. 6b und 6c: zwei Ansichten eines Führungsbauteils aus Folien gem. Fig. 6a
- Fig. 6d: schematisch den Strömungsverlauf in einem Mikrokanaldispergator

Die in Fig. 1 von rechts nach links schräg nach oben verlaufenden Scharen von Mikrokanälen 1a münden linksseitig in eine Verteilerkammer 3a, der ein Fluidstrom A zugeführt werden kann. Analog münden die schräg nach unten verlaufenden Scharen der Mikrokanäle 1b linksseitig in eine Verteilerkammer 3b, der ein Fluidstrom B zugeführt werden kann. Beide Scharen von Mikrokanälen münden, ohne sich zu durchkreuzen, in einem gemeinsamen Dispergier-/Reaktionsraum 4. Die spiegelsymmetrische Anordnung der Mikrokanäle 1a und 1b ist nicht zwingend erforderlich. Die Mikrokanäle 1b können z. B. auch eine andere Neigung gegen die Horizontalachse haben als die Mikrokanäle 1a. So können beispielsweise die Mikrokanäle 1a für den Fluidstrom A der dispersen Phase parallel zur Symmetrieachse verlaufen, sodaß die Fluidfäden von A parallel zur Rohrwand des Dispergier-/Reaktionsraumes 4 aus den Mikrokanälen austreten. Dabei wird die Länge der Mikrokanäle bei vorgegebenen äußeren Abmessungen des Dispergierapparates minimiert. Bei dieser Vorrichtung sind die Mikrokanäle einer Schar jeweils strömungstechnisch untereinander gleich, d. h. die Mikrokanäle einer Schar besitzen alle den gleichen Strömungswiderstand, sodaß die Fluidströme A bzw. B gleichmäßig auf die Schar der Mikrokanäle 1a bzw. 1b aufgeteilt werden.

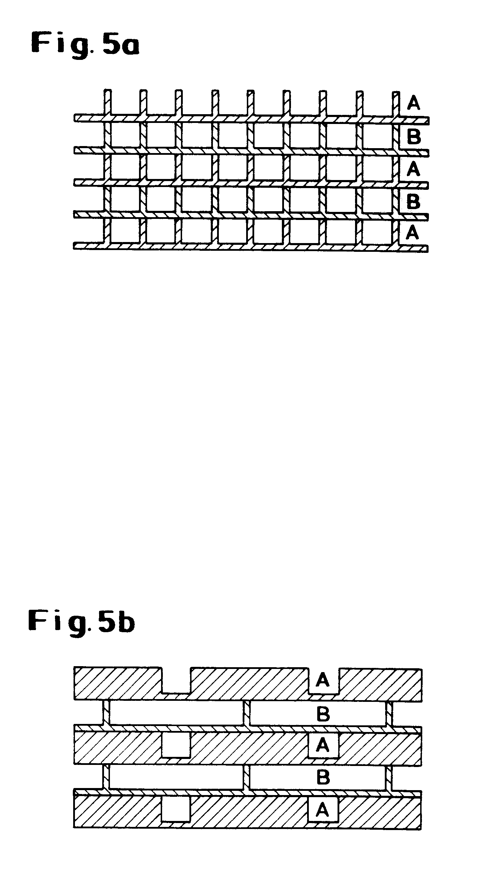

In Fig. 2 ist der Mündungsquerschnitt des Mikrostruktur-Dispergierapparates perspektivisch dargestellt. In der obersten Platte münden z. B. die dem Fluidstrom A zugeordneten Mikrokanäle 1a und in der darauffolgenden darunterliegenden Platte die Mikrokanäle 1b des Fluidstroms B. Darauf folgt wieder eine Lage oder Platte mit den zum Fluidstrom A gehörenden Mikrokanälen usw.. Unmittelbar am Austritt aus den Mikrokanälen erfolgt die Dispergierung des Fluidstroms A. In Fig. 3 und 4 ist gezeigt, in welcher räumlichen Reihenfolge die Fluidströme A und B am Mündungsquerschnitt in den Dispergier/-Reaktionsraum 4 eintreten. Eine Schicht mit Fluidfäden 6a grenzt also jeweils an eine Schicht mit Fluidfäden 6b. Die Anordnung kann natürlich auch um 90 ° gedreht werden, so daß die Schichten nebeneinander liegen. In Fig. 5a und 5b ist gezeigt, wie durch Variation der Geometrie der Mikrokanäle und der Abstände der Mikrokanäle für die disperse Phase A der Zwischenraum zwischen den gebildeten Partikeln und damit die Güte der Umhüllung der Partikeln durch die kontinuierliche Phase B variiert werden kann.

Der Mikrostruktur-Dispergierapparat gemäß Fig. 1 kann auch in der Weise modifiziert werden, daß drei oder mehr Fluidströme in jeweils getrennten Scharen von Mikrokanälen aufgeteilt werden, die dann im Dispergier-/Reaktionsraum zusammengeführt werden.

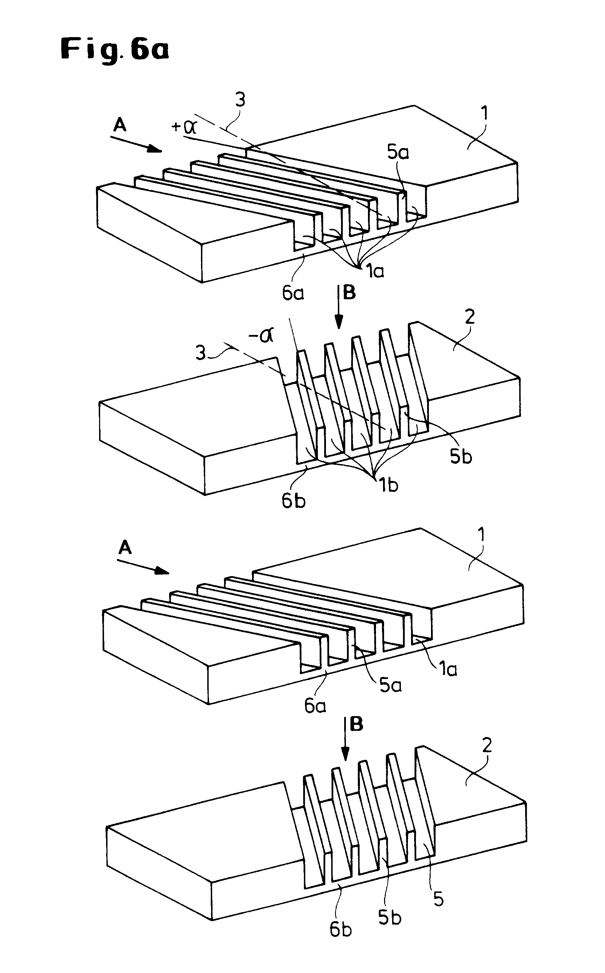

Nachfolgend wird anhand der Figuren 6a bis 6d eine praktische Ausführung des Mikrostruktur-Dispergierapparates beschrieben, die sich besonders bewährt hat.

Die Folien 1 bzw. 2 gemäß Fig. 6a haben eine Dicke von 100 µm bei einer Länge und Breite im Millimeterbereich. Die Foliensorte 1 ist von einer Schar vorzugsweise paralleler, eng benachbarter und schräg zur Vermischerlängsachse 3 verlaufender Mikrokanäle durchzogen, die von hinten links beginnend gegenüber dieser Achse 3 einen spitzen Winkel +α bilden und im mittleren Bereich der vorderen Folienlängsseite münden. Die Foliensorte 2 ist in derselben Art und Weise von Mikrokanälen 1b durchzogen; jedoch beträgt hier der Winkel zwischen Längsachse der Mikrokanäle und des Dispergierapparates -α; d. h. die Mikrokanäle 1b verlaufen von rechts hinten zum mittleren Bereich der vorderen Folienlängsseite. Der Betrag des Winkels muß jedoch nicht der gleiche sein. Die Mikrokanäle 1a, 1b können mit Formdiamanten eingearbeitet werden und haben vorzugsweise einen hydraulischen Durchmesser zwischen 10 µm und 250 µm bei einer Stärke der Zwischenstege 5a, 5b von 30 µm; die Stärke der Mikrokanalböden 6a, 6b beträgt 30 µm.

Die für die Herstellung von Mikrokanälen unterschiedlichster Querschnitte erforderlichen Werkzeuge und Vorrichtungen sind z. B. in der DE 37 09 278 C2 dargestellt und beschrieben. Die Pfeile A und B symbolisieren die Strömungsrichtungen der zu dispergierenden Fluide A und B.

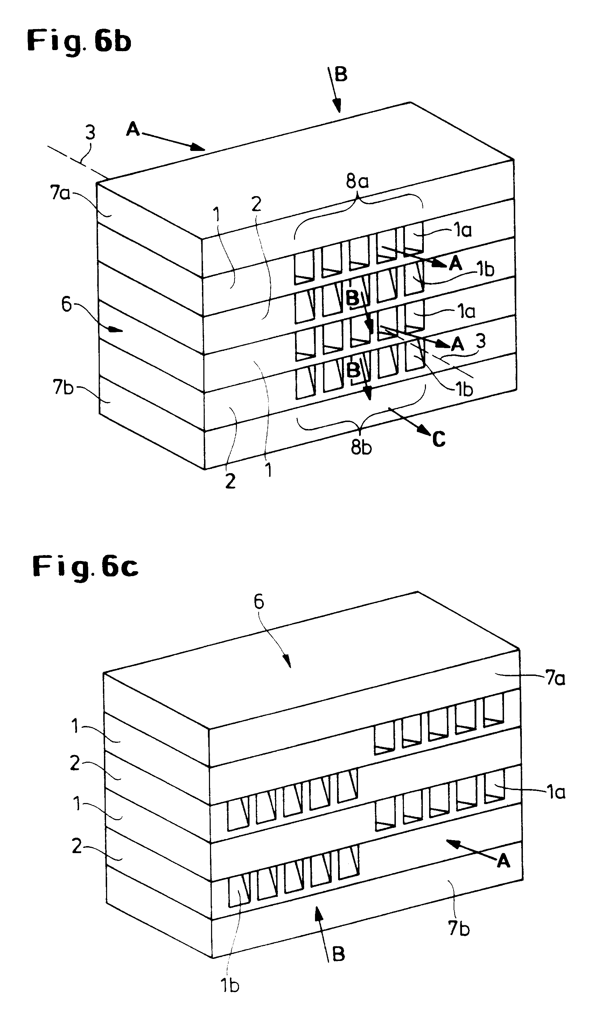

Fig. 6b zeigt, wie für die Herstellung eines Führungsbauteils 6 die Foliensorten 1 und 2 abwechselnd übereinandergeschichtet werden, mit einer oberen und einer unteren Deckplatte 7a, 7b versehen werden und z. B. mittels Diffusionsschweißen zu einem homogenen, vakuumdichten und druckfesten Mikrostrukturkörper verbunden werden. Wie aus Fig. 6b zu ersehen ist, liegen die von den Folien 1 und 2 gebildeten Reihen 8a, 8b von an den Dispergier-/Reaktionsraum angrenzenden Mündungen der Kanäle 1a bzw. 1b fluchtend übereinander.

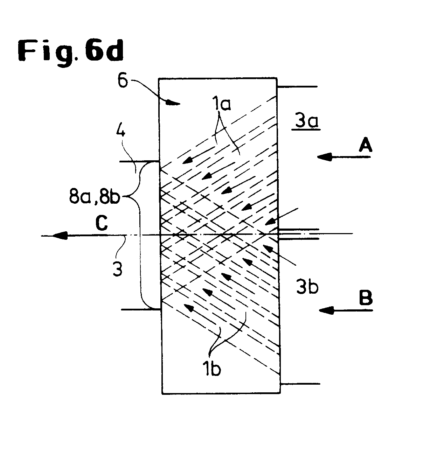

Diese Reihen 8a, 8b bilden einen gemeinsamen, z. B. quadratischen Querschnitt mit einer Dichte von ca. fünftausend Mündungen pro cm², die an den gemeinsamen Dispergier-/ Reaktionsraum 4 angrenzen. Fig. 6c zeigt das Führungsbauteil 6 von der Zuströmseite der Fluide A und B aus gesehen. Wie hieraus und aus der Draufsicht gemäß Fig. 6d zu ersehen ist, divergieren die zur Längsachse 3 schräg verlaufenden Kanäle 1a, 1b vom Dispergier-/ Reaktionsraum 4 aus abwechselnd zur Fluideintrittsseite hin so, daß die Fluide A und B über je eine Eintrittskammer oder Verteilerkammer 3a und 3b getrennt in das Fühtungsbauteil 6 eingespeist werden können. Nach dem Austritt aus dem Führungsbauteil 6 werden die feinen Stromfäden der Fluide A und B zueinander in Kontakt gebracht, wobei der Dispergiervorgang einsetzt.

### Beispiel 1: Dispergieren durch Zertropfen

Paraffinöl (dynamische Viskosität 15 mPas) wurde bei 20 °C in Wasser unter Einsatz des in Fig. 1 und Fig. 6a - 6d dargestellten Mikrostruktur-Dispergierapparates zertropft. Zielgröße war die Herstellung möglichst feiner Öltropfen bei gleichzeitig enger Tropfengrößenverteilung.

Der eingesetzte Mikrostruktur-Dispergierapparat ist aus 100 übereinandergeschichteten Edelstahlfolien (Foliendicke 100 µm) aufgebaut, wobei jeweils 50 Folien der Öl- und der Wasserphase zugeordnet sind. Auf jeder Folie sind 54 Mikrokanäle mit rechteckiger Geometrie (Breite x Höhe = 100 µm x 70 µm) mit Hilfe eines formgeschliffenen Diamantwerkzeuges eingebracht. Die Länge der Mikrokanäle beträgt 14 mm. Insgesamt stehen damit für die disperse Ölphase wie auch für die kontinuierliche Wasserphase jeweils 2700 Mikrokanäle zur Verfügung. Der Durchsatz an Paraffinöl durch den Mikrostruktur-Dispergierapparat beträgt 8 l/h, an Wasser 20 l/h. Die daraus resultierende Strömungsgeschwindigkeit in den Mikrokanälen und am Kanalaustritt beträgt für die Ölphase 0.12 m/s (Reynoldszahl = 0.7), für die Wasserphase 0.29 m/s (Reynoldszahl = 24). Die Dispergierung mit einem solchen Mikrostruktur-Dispergierapparat führt zu einem äußerst engen Tropfengrößenspektrum mit einem mittleren Tropfendurchmesser von 238 µm bei einer Standardabweichung von 45 µm. Vergleichende Untersuchungen mit Dispergierapparaten nach dem Stand der Technik (Rührkessel, Düsen, Lochplatten) zeigen, daß mit solchen Apparaten derart enge Tropfengrößenspektren nicht einstellbar sind.

Als typische Anwendungsfelder seien hier beispielhaft Perlpolymerisationen genannt, wie z.B. die Herstellung von einheitlich kugelförmigen Ionenaustauscherharzen.

### Beispiel 2: Dispergieren durch Begasen von Flüssigkeiten

Wasser mit 0.22 Gew.-% Isopropanol zur Koaleszenzhemmung wurde mit Stickstoff in einem Blasensäulenreaktor (Reaktorhöhe 2 m, Reaktordurchmesser 150 mm) begast. Am Boden des Blasensäulenreaktors war der in Beispiel 1 genauer spezifizierte Mikrostruktur-Dispergierapparat installiert. Bei einem Durchsatz durch den Mikrostruktur-Dispergierapparat von 100 l/h für Wasser und 2 Nm³/h für Stickstoff, d. h. bei einer auf den leeren Reaktorquerschnitt bezogenen Leerrohr-Gasgeschwindigkeit von 3,1 cm/s, ergeben sich feine Gasblasen von ca. 500 µm Durchmesser bei gleichzeitig enger Blasengrößenverteilung. Daraus resultiert ein entsprechend enges Verweilzeitspektrum der aufsteigenden Gasblasen im Blasensäulenreaktor sowie eine große volumenspezifische Phasengrenzfläche zwischen Gas- und Flüssigphase. Vergleichende Untersuchungen unter Einsatz konventioneller Begaservorrichtungen (Injektor, Fritte) führen bei der gleichen Leerrohr-Gasgeschwindigkeit von 3.1 cm/s zu deutlich breiteren Blasengrößenverteilungen. Der unter diesen Bedingungen erzielbare Gasgehalt im Blasensäulenreaktor beträgt 35 % bei Einsatz des Mikrostruktur-Dispergierapparates, 20 % beim Injektor und lediglich 11 % bei der Fritte. Bei einem Leistungseintrag von 0.5 kW/m³ ergibt sich für den Mikrostruktur-Dispergierapparat eine maximale volumenspezifische Phasengrenzfläche von 35 cm²/cm³, für den Injektor dagegen lediglich 13 cm²/cm³.

Beispielhaft sind als Anwendungsfelder für den Mikrostruktur-Dispergierapparat alle Gas-Flüssigkeit-Reaktionen zu nennen, vorzugsweise schnelle Reaktionen, bei denen die Brutto-Reaktionsgeschwindigkeit durch den Stofftransport bestimmt wird, sowie Reaktionen, bei denen eine möglichst vollständige Abreicherung der Gasphase an hinsichtlich der Reaktionskomponente angestrebt wird.

### Literatur

[1] Deckwer, W.-D. Reaktionstechnik in Blasensäulen; Verlag Sauerländer, 1985
[2] Klinksiek, B.; Koglin, B. ;Verfahren zur Herstellung von Salben und Emulsionen Tagungsband GVC/VDI, Jahrestagung 1991 in Köln
[3] Gerstenberg, H. ; Blasensäulen-Reaktoren; Chem.-Ing.-Tech. 51 (1979) 208
[4] Blaß E.; Bildung und Koaleszenz von Blasen und Tropfen; Dechema-Monographien, Band 114, VCH Verlagsgesellschaft

## Patentansprüche

1. Verfahren zur kontinuierlichen Dispergierung von mindestens einem die Dispersphase bildenden Fluid A und mindestens einer die Hüllphase bildenden kontinuierlichen Phase eines Fluids B, bei dem mindestens ein Fluidstrom A und mindestens ein Fluidstrom B einem Dispergierapparat zugeführt werden und dort in einem Dispergierraum (4) aufeinandertreffen, dadurch gekennzeichnet, daß die Fluidströme A,B in einem Mikrostruktur-Dispergierapparat (1a,1b,3a,3b) durch eine ihnen jeweils zugeordnete Schar von Mikrokanälen (1a,1b) in räumlich getrennte, strömende Fluidfäden zerteilt werden, die mit für das jeweilige Fluid gleichen Strömungsgeschwindigkeiten derart in den Dispergierraum (4) austreten, daß am Austritt in den Dispergierraum jeweils ein Fluidstrahl (6a) der dispersen Phase zu einem Fluidstrahl (6b) der kontinuierlichen Phase unmittelbar benachbart ist und jeweils ein in Partikel zerfallender Fluidstrahl (6a) der dispersen Phase von den benachbarten Fluidstrahlen (6b) der kontinuierlichen Phase eingehüllt wird.

2. Verfahren nach Anspruch 1, dadurch gekennzeichnet, daß als Fluid A ein Gas und als Fluid B eine Flüssigkeit verwendet werden.

3. Verfahren nach Anspruch 1, dadurch gekennzeichnet, daß als Fluide mindestens zwei verschiedene, emulgierbare Flüssigkeiten verwendet werden.

4. Verfahren nach Anspruch 2 oder dadurch gekennzeichnet, daß als Fluide chemisch miteinander reagierende Edukte A,B eingesetzt werden, so daß im Dispergierraum gleichzeitig mit der Dispergierung eine chemische Umsetzung der Edukte A,B erfolgt.

5. Verfahren nach Anspruch 1 bis 4, dadurch gekennzeichnet, daß in den Mikrokanälen (1a, 1b) laminare Strömungsbedingungen für die Fluide A, B aufrechterhalten werden.

6. Verfahren nach Anspruch 1 bis 5, dadurch gekennzeichnet, daß die Fluidfäden der Fluide A, B in abwechselnd übereinanderliegenden oder nebeneinanderliegenden Schichten in den Reaktionsraum austreten.

7. Verfahren nach Anspruch 1 bis 5, dadurch gekennzeichnet, daß die Fluidfäden der Fluide A,B schachbrettartig in den Dispergierraum austreten.

8. Verfahren nach Anspruch 1 bis 7, dadurch gekennzeichnet, daß der Durchmesser bzw. die Dicke d der Fluidstrahlen (6a,6b) am Eintritt in den Dispergierraum (4) auf einen Wert zwischen 10 µm und 1000 µm, vorzugsweise zwischen 50 µm und 250 µm eingestellt wird.

9. Verfahren nach Anspruch dadurch gekennzeichnet, daß das Querschnittsverhältnis der Fluidstrahlen (6a,6b) der kontinuierlichen Phase B und der dispersen Phase A auf Werte zwischen 1 und 100 , vorzugsweise zwischen 2 und 50 eingestellt wird.

10. Verfahren nach Anspruch 1 bis 9, dadurch gekennzeichnet, daß in Nachbarschaft zu einem Fluidstrahl (6a,6b) zusätzlich ein Fluidstrahl eines temperierten Inertfluids in den Dispergierraum (4) eingespeist wird.

## Claims

1. Process for the continuous dispersion of at least one fluid A constituting the disperse phase and at least one continuous phase constituting the enclosing phase of a fluid B, in which at least one fluid stream A and at least one fluid stream B are fed into a dispersion apparatus and come into contact therein in a dispersion chamber (4), characterised in that the fluid streams A, B are broken up into spatially separate, flowing fluid filaments in a microstructure dispersion apparatus (1a, 1b, 3a, 3b) by a system of microchannels (1a, 1b) associated therewith, which filaments are discharged into the dispersion chamber (4) at identical flow velocities for the particular fluid in such a manner that on discharge into the dispersion chamber a fluid jet (6a) of the disperse phase is in each case immediately adjacent to a fluid jet (6b) of the continuous phase and in each case a fluid jet (6a) of the disperse phase is enclosed as it is broken up into particles in the adjacent fluid jets (6b) of the continuous phase.

2. Process according to claim 1, characterised in that a gas is used as fluid A and a liquid as fluid B.

3. Process according to claim 1, characterised in that at least two different, emulsifiable liquids are used as the fluids.

4. Process according to claim 2 or 3, characterised in that educts A, B which react together chemically are used as the fluids, such that a chemical reaction of the educts A, B proceeds in the dispersion chamber simultaneously with the dispersion.

5. Process according to claims 1 to 4, characterised in that laminar flow conditions are maintained in the microchannels (1a, 1b) for the fluids A, B.

6. Process according to claims 1 to 5, characterised in that the fluid filaments of the fluids A, B are discharged into the reaction chamber in alternately superposed or adjacent layers.

7. Process according to claims 1 to 5, characterised in that the fluid filaments of the fluids A, B are discharged into the dispersion chamber in a chess board arrangement.

8. Process according to claims 1 to 7, characterised in that the diameter or thickness d of the fluid jets (6a, 6b) on entry into the dispersion chamber (4) is adjusted to a value between 10 µm and 1000 µm, preferably between 50 µm and 250 µm.

9. Process according to claim 8, characterised in that the cross-sectional ratio of the fluid jets (6a, 6b) of the continuous phase B and the disperse phase A is adjusted to values between 1 and 100, preferably between 2 and 50.

10. Process according to claims 1 to 9, characterised in that a fluid jet of a temperature-controlled inert fluid is introduced into the dispersion chamber (4) in the vicinity of a fluid jet (6a, 6b).

## Revendications

1. Procédé de dispersion continue d'au moins un fluide A constituant la phase dispersée et d'au moins une phase continue d'un fluide B constituant la phase enveloppante, dans lequel au moins un flux de fluide A et au moins un flux de fluide B sont amenés dans un appareil de dispersion et s'y rencontrent dans une chambre de dispersion (4), caractérisé en ce que les flux de fluides A, B sont divisés dans un appareil de dispersion à microstructure (1a, 1b, 3a, 3b) par une nuée de microcanaux (1a, 1b) qui leur sont respectivement alloués en filaments d'écoulement de fluide séparés dans l'espace, qui pénètrent dans la chambre de dispersion (4) avec la même vitesse d'écoulement pour le fluide correspondant, de telle manière que, à l'entrée dans la chambre de dispersion, un filament de fluide (6a) de la phase dispersée est immédiatement adjacent à un filament de fluide (6b) de la phase continue et un filament de fluide (6a) se divisant respectivement en particules de la phase dispersée est enveloppé par les filaments de fluide (6b) voisins de la phase continue.

2. Procédé suivant la revendication 1, caractérisé en ce qu'on utilise comme fluide A un gaz et comme fluide B un liquide.

3. Procédé suivant la revendication 1, caractérisé en ce qu'on utilise comme fluides au moins deux liquides différents émulsifiables.

4. Procédé suivant la revendication 2 ou 3, caractérisé en ce qu'on utilise comme fluides des produits A, B réagissant chimiquement l'un avec l'autre, de sorte qu'une réaction chimique entre les produits A, B se déroule en même temps que la dispersion dans la chambre de dispersion.

5. Procédé suivant les revendications 1 à 4, caractérisé en ce qu'on maintient des conditions d'écoulement laminaires pour les flux de fluides A et B dans les microcanaux (1a, 1b).

6. Procédé suivant les revendications 1 à 5, caractérisé en ce que les filaments de fluide des fluides A, B pénètrent dans la chambre de dispersion en couches alternativement superposées ou juxtaposées.

7. Procédé suivant les revendications 1 à 5, caractérisé en ce que les filaments de fluide des fluides A, B pénètrent en damier dans la chambre de dispersion.

8. Procédé suivant les revendications 1 à 7, caractérisé en ce que le diamètre ou l'épaisseur d des filaments de fluide (6a, 6b) à l'entrée dans la chambre de dispersion (4) est réglée à une valeur comprise entre 10 µm et 1000 µm, de préférence entre 50 µm et 250 µm.

9. Procédé suivant la revendication 8, caractérisé en ce que le rapport des sections des filaments de fluide (6a, 6b) de la phase continue B et de la phase dispersée A est réglé à des valeurs comprises entre 1 et 100, de préférence entre 2 et 50.

10. Procédé suivant les revendications 1 à 9, caractérisé en ce que, à proximité d'un filament de fluide (6a, 6b), on introduit en plus un filament d'un fluide inerte tempéré dans la chambre de dispersion (4).
